# EUROPEAN PATENT SPECIFICATION

(11) **EP 3 296 870 B1**
(45) Date of publication and mention of the grant of the patent: **30.12.2020**
(21) Application number: 15891597.5
(22) Date of filing: 17.07.2015
(51) Int. Cl.: G06F 9/50, H04L 29/08

(54) **CDN-BASED CONTENT MANAGEMENT SYSTEM**
CDN-BASIERTES INHALTSVERWALTUNGSSYSTEM
SYSTÈME DE GESTION DE CONTENU BASÉE SUR UN CDN

(30) Priority: 12.05.2015 CN 201510239665
(43) Date of publication of application: 21.03.2018
(73) Proprietor: Wangsu Science & Technology Co., Ltd, Shanghai 201822 (CN)
(72) Inventor: CHEN, Liang, Huancheng Road, Jiading District (CN); LIN, Gengxin, Huancheng Road, Jiading District (CN)
(74) Representative: de Arpe Fernandez, Manuel
(86) International application number: PCT/CN2015/084341
(87) International publication number: WO 2016/179894

(56) References cited:
- WO-A1-03/088065
- WO-A1-2012/116078
- WO-A1-2014/100759
- CN-A- 102 801 550
- CN-A- 104 011 701
- US-A1- 2013 046 807
- US-A1- 2013 114 744

## Description

### FIELD OF THE DISCLOSURE

The present disclosure generally relates to the field of content management system and, more particularly, relates to a content delivery network (CDN)-based content management system.

### BACKGROUND

With the rapid development of the Internet, more and more users rely on the Internet to browse webpages, listen to music, and watch videos. To ensure users can quickly obtain network information, more and more internet websites require CDN for acceleration. The basic idea of CDN is to avoid bottlenecks and links, on the internet, that can possibly affect the speed and stability of data transmission, so that content can be transmitted with higher speed and higher stability. Specifically, CDN caches customer data in edge nodes to increase the access speed of client terminals.

In conventional technology, edge cache servers cache files in the following two sections:

First, a client sending a push request, to solve the problems associated with updates in the source files of the client, deleting files or performing expiration processing on the files.

Second, by predictively analyzing possible hotspots, performing a prefetch operation, to improve user's experience of the first access.

However, the abovementioned methods cause edge servers to cache a large number of cached files, and have the following shortcomings:
(1) conventional CDN products lack content management on edge servers, and are not able to manage the entire life cycle of the cached files;
(2) conventional CDN products are not able to perform targeted processing on cached files of different caching types, e.g., performing live streaming control, streaming media format conversion, and image format conversion for streaming media content; and
(3) conventional CDN products are not able to implement precise range control, precise traffic control, and hot and cold prefetches in the prefetch function of the cached files.

The document WO 03/088065 A1 discloses a tiered distribution service provided in a content delivery network having a set of surrogate origin or "edge" servers organized into regions and that provide content delivery on behalf of participating content providers, wherein a given content provider operates an origin server.

### BRIEF SUMMARY OF THE DISCLOSURE

In view of the shortcomings in above-mentioned conventional technology, the goal of the present disclosure includes providing a CDN-based content management system. The target URL and the operation types may be sent to distributed scheduling servers (Master), and the Master servers may send the target URL and the operation types to the task execution servers (Work) based on scheduling policies. The Work servers may distribute task messages to all content caching servers (CacheServer) at a shortest time, and the CacheServer servers may receive content management commands and manage cached files.

To realize the abovementioned goal and other related goals, the present disclosure provides a CDN-based content management system according to the claims.

As mentioned above, the disclosed CDN-based content management system may have the following advantages:
(1) distributed Master-Work architecture may be applied, and an arbitrary number of Master servers and Work servers may be deployed. A plurality of Master servers may form a distributed scheduling center, and one Master server may be selected as the central scheduling server (NameMaster, or NM), to be in charge of global service management. By applying lateral extension distribution of the Master servers, the throughput of the system may be increased;
(2) content management system supports: prefetch, push, file verification (coverage), image format conversion, video conversion, live broadcast control, and other content management requests, in addition, by increasing Work servers and extending terminals Beacon on caching server clients, caching management functions may be rapidly added;
(3) a distributed reliability coordinating system may be applied to manage cluster status, and the status of all computers in a cluster may be monitored. When failure occurs, Bully algorithm may be applied in the Master cluster to select the Master server with the highest number to take over global coordination. In the Work cluster, by combining a switch between the master and the replacement with an intelligent scheduling by the Master, the system may have a high availability;
(4) the Master servers may receive clients' requests, split tasks with operators based on load balancing and scheduling policies and sent split tasks to different Work servers , so as to take advantage of the regions and operators that the work Servers are located in to allocate tasks with reliability and high efficiency. Reliability problems caused by inter-operator network may be solved.
(5) task data may be stored in the big data center to solve the growing demand for content management. Also, through the big data center, real-time operations of the clients may be statistically analyzed, and the content management demands of the clients' may be studied and analyzed.

### BRIEF DESCRIPTION OF THE DRAWINGS

FIG. 1 illustrates a structure of an exemplary CDN-based content management system according to the disclosed embodiments of the present disclosure;
FIG. 2 illustrates a structure of an exemplary Master server according to the disclosed embodiments of the present disclosure;
FIG. 3 illustrates an exemplary process flow of a Master server according to the disclosed embodiments of the present disclosure;
FIG. 4 illustrates a structure of an exemplary Work server according to the disclosed embodiments of the present disclosure;
FIG. 5 illustrates an exemplary process flow of a Work server according to the disclosed embodiments of the present disclosure;
FIG. 6 illustrates an exemplary process flow of a message sending module according to the disclosed embodiments of the present disclosure;
FIG. 7 illustrates a structure of an exemplary content management client terminal Beacon according to the disclosed embodiments of the present disclosure;
FIG. 8 illustrates a process flow of an exemplary prefetch operation according to the disclosed embodiments of the present disclosure; and
FIG. 9 illustrates a process flow of an exemplary push operation according to the disclosed embodiments of the present disclosure.

### Description of labeling of elements

- 1: distributed scheduling center
- 2: big data center
- 3: task executing server cluster
- 4: distributed reliability coordinating system
- 5: content caching server
- 11: system interface module
- 12: task scheduling module
- 13: policy module
- 14: Work load balancing module
- 15: sub-task allocating module
- 31: sub-task receiving module
- 32: task computing module
- 33: message sending module
- 34: task feedback module
- 35: caching module
- 51: protocol processing module
- 52: task executing module
- 53: task feedback module

### DETAILED DESCRIPTION

Specific embodiments are illustrated as follows to describe the present disclosure. Those skilled in the art can easily understand the other advantages and effects of the present disclosure. The present disclosure may also be implemented or applied using other different embodiments. The various details in the present disclosure may also be based on different perspectives and applications, and may have various modifications and changes without departing from the scope of the present disclosure.

It should be noted that, the figures provided by the disclosed embodiments are only exemplary to illustrate the basic idea of the present disclosure. Thus, the figures only show components related to the disclosure and the components are not depicted in accordance with the actual number of components, and the shape and size of the components in implementations. The actual form, quantity, and ratio of a component can vary arbitrarily in implementations, and the layout patterns of the components can be more complex.

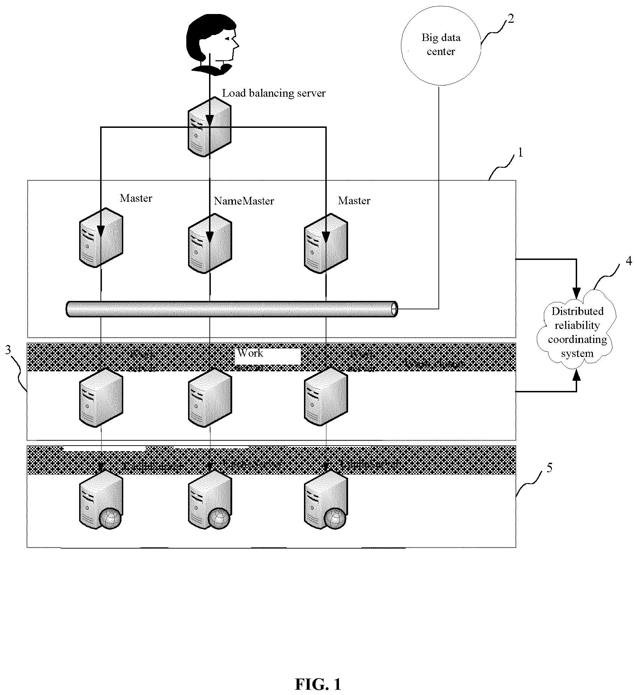

As shown in FIG. 1, the CDN-based content management system provided by the present disclosure may include a distributed scheduling center 1, a big data center 2, a task executing server cluster (Work cluster) 3, a distributed reliability coordinating system 4, and content caching servers (CacheServer) 5.

The distributed scheduling center 1 may include a plurality of distributed scheduling servers (Master servers), configured to schedule tasks based on clients' requests. The main functions of the Master servers may include being in charge of receiving and analyzing tasks and storing data, managing clusters, and scheduling tasks and managing life cycles of tasks. Specifically, through lateral extension distribution of a plurality of distributed scheduling servers, the throughput of the system may be increased and high availability may be ensured. Meanwhile, the front end may apply a reverse proxy for load balancing, so that the clients' requests can be uniformly distributed on a plurality of distributed scheduling servers.

In the distributed scheduling center 1, one Master server may be selected as the central scheduling server (NameMaster). NameMaster may monitor the information of all Master servers in the cluster. If NameMaster detects any of the Master servers fails, the NameMaster may select another Master server to take over the work load of the failed Master server, based on load condition; if NameMaster fails, other Master servers may select a NameMaster using bully algorithm, when the selection is complete, a new NameMaster may take over the work load from the previous NameMaster.

The big data center 2 may be configured to store a massive number of clients' task request data, and may count and analyze task data.

The Work cluster 3 may be deployed in different regions and different operators, configured to receive the task conversion commands sent by the distributed scheduling servers, and, through computation, send task commands to the content caching servers of corresponding regions and operators.

The distributed reliability coordinating system 4 may be configured to store the status and properties of all the servers in the content management system.

A content caching server 5 may be arranged with a content management client terminal Beacon, for caching clients' files.

Specifically, a content management client terminal Beacon may be configured to execute tasks assigned by Work servers, and send results of the tasks as feedback to the Work servers. In an ordinary CDN network, a multi-tiered cache architecture may be included. In one embodiment, a two-tiered cache architecture may be used as an example. The two-tiered cache architecture may be referred to as a first-tier cache and a second-tier cache, but the disclosure should not be limited to the two-tiered cache architecture. Content caching servers may include a multi-tiered cache architecture according to application requirements.

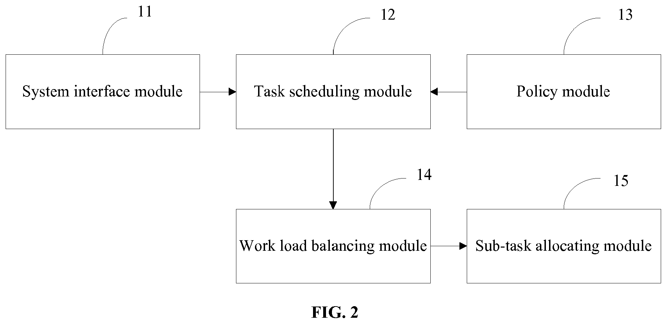

As shown in FIG. 2, A Master server may include a system interface module 11, a task scheduling module 12, a policy module 13, a task executing (Work) load balancing module 14, and a sub-task allocating module 15. The task scheduling module 12 may be connected to the system interface module 11, the policy module 13, and the Work load balancing module 14, respectively. The Work load balancing module 14 may further be connected to the sub-task allocating module 15.

The system interface module 11 may be configured to receive and verify clients' content management requests, and store task data. Meanwhile, the system interface module 11 may add tasks into the task queue.

The task scheduling module 12 may be configured to obtain tasks from the task queue based on the policy and the configuration of the current clients. The task scheduling module 12 may initiate the tasks and scheduling tasks for execution.

The policy module 13 may generate different policies for clients based on service configuration data and client types, for the task scheduling module to use.

Specifically, the service configuration data may include but is not limited to acceleration ranges of clients' regions, rankings of clients, etc.; the client types may include but are not limited to webpages, images, downloads, on-demands, and live broadcast.

The Work load balancing module 14 may be configured to register the current load, CPU, memory, and task allocation of the Work servers, and based on the principles of prioritizing the same region and the operators, select the Work server having the lowest synthetic load to execute the allocated task.

Specifically, Master servers may register the current load, CPU, memory, and task allocation of the Work servers through ZooKeeper. ZooKeeper may be a distributed and open source distributed application coordination service, and may be an open source implementation of Google's Chubby. ZooKeeper may be an important component of Hadoop and Hbase. ZooKeeper may be a software capable of providing consistent service to distributed applications, and the service may include: configuration management, naming service, distribution synchronization, group service, etc.

The sub-task allocating module 15 may be configured to split the task data into sub-tasks based on regions and operators, send the sub-tasks to corresponding target Work server, and maintain the connection relationship between the Work server and the sub-tasks.

Specifically, the sub-task allocating module 15 may split the task data by picking one out of two based on regions and operators, apply json as the language for data exchange to program the task data, and apply asynchronous communication mechanism to send the task data.

Because the connection relationship between the sub-tasks and the Work servers are stored, when a Work server fails, the task may be recovered based on the connection relationship between the sub-tasks and the Work servers.

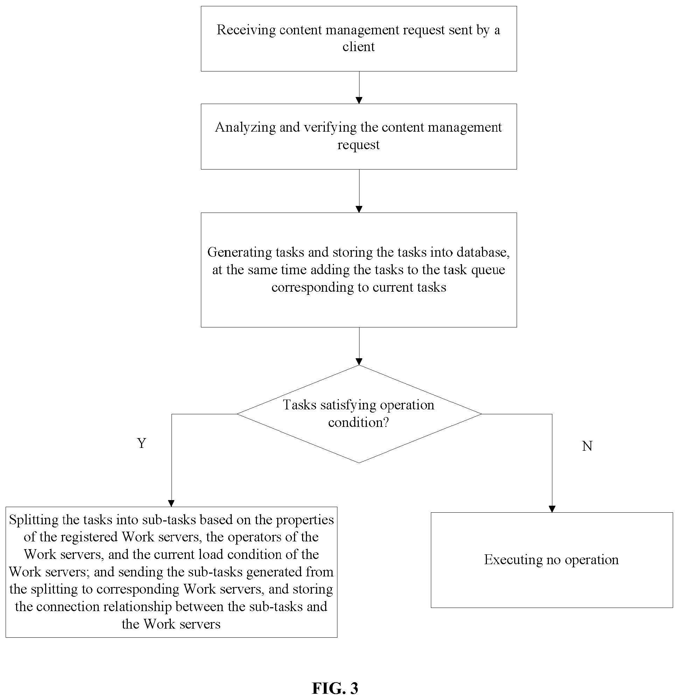

As shown in FIG. 3, the process flow of a Master server may include the following steps:
31) The Master server may receive the content management request submitted by a client, where the content management request may include but are not limited to push, prefetch, file verification (coverage) request, etc.;
32) The Master server may analyze and verify the content management request;
33) The Master server may generate a task and store the task into a database, and at the same time add the task into the task queue corresponding to current tasks;
34) The Master server may obtain the tasks in each task queue, and determine if the tasks satisfy operation conditions based on clients' policies and configurations;
35) If the tasks satisfy operation conditions, the Master server may split the tasks into sub-tasks based on the properties of the registered Work servers, the operators of the Work servers, and the current load condition of the Work servers; and send the sub-tasks generated from the splitting to corresponding Work servers, and store the connection relationship between the sub-tasks and the Work servers; and
36) If the tasks fail to satisfy operation conditions, no operation may be executed.

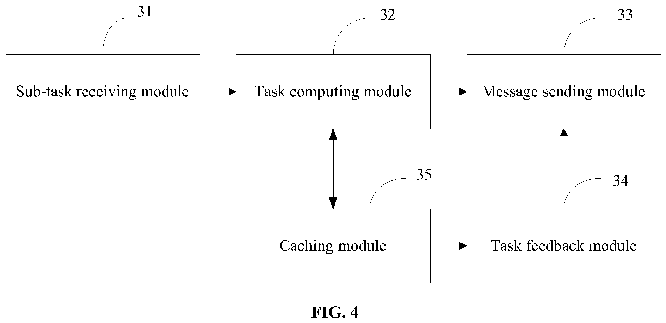

As shown in FIG. 4, a Work server may include a sub-task receiving module 31, a task computing module 32, a message sending module 33, a task feedback module 34, and a caching module 35. The task computing module 32 may be connected with the sub-task receiving module 31, the message sending module 33, and the caching module 35, respectively. The message sending module 33 may further be connected to the task feedback module 34.

The sub-task receiving module 31 may be configured to receive the sub-tasks sent by the Master servers, and add the sub-tasks into the task queue.

The task computing module 32 may be configured to calculate the ranges of the content caching servers covered by the tasks based on the clients' CDN acceleration information cached in the caching module, and generate task commands.

The message sending module 33 may be configured to send the task commands to all target computers.

Specifically, the message sending module 33 may apply highly-efficient JAVA NIO asynchronous communication mechanism, multiple channels, and proprietary protocols to send the task commands to all the target computers.

The task feedback module 34 may be configured to receive the task results from the content management client terminals, and update task progress based on task results. Specifically, the task feedback module may utilize JAVA NIO asynchronous communication mechanism to receive the task results from the content management client terminals, and update task progress based on task results.

The caching module 35 may be configured to cache the status of each node in the CDN network, and update the software and/or hardware failures of all nodes in real-time; and store and update the clients' service configuration data in real-time, and cache the calculation results of target tasks.

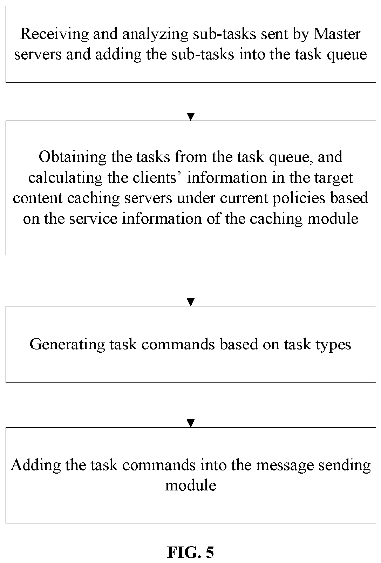

The main function of the Work servers may include receiving the tasks allocated by the distributed scheduling center, calculate the target tasks, configure task commands and send task commands to target computers, collect task results, and send the task results to the distributed scheduling center as feedback. As shown in FIG. 5, the process flow of a Work server may include the following steps:
51) The Work server may receive and analyze the sub-tasks sent by the Master servers, and add the sub-tasks into the task queue;
52) The Work server may obtain the tasks from the task queue, and calculate the clients' information in the target content caching servers under current policies based on the service information of the caching module;
53) The Work server may generate task commands based on task types; and
54) The Work server may add the task commands into the message sending module.

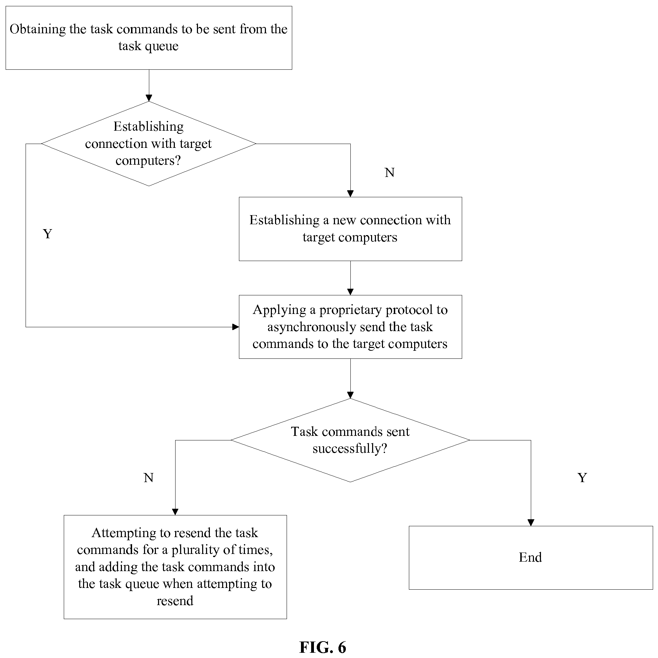

The message sending module may establish connections with target computers based on a one-to-many relationship, and send task commands with accuracy and high efficiency. As shown in FIG. 6, the process flow of the message sending module may include the following steps:
61) The message sending module may obtain the task commands to be sent from the task queue;
62) The message sending module may determine if connections may be established with target computers; if connections are established, the process may be directed to step 64); if no connections are established, the process may be directed to step 63);
63) A new connection may be established with target computers;
64) A proprietary protocol may be applied to asynchronously send the task commands to the target computers; and
65) The message sending module may determine if the task commands are successfully sent; if successfully sent, the process may end; if unsuccessfully sent, caused by a feedback from client terminal showing failure or a failure caused by a timeout, the message sending module may attempt to resend the task commands for a plurality of times, and may add the task commands into the task queue when attempting to resend.

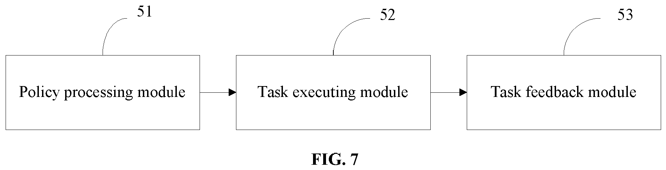

As shown in FIG. 7, the content management client terminal Beacon, deployed on a content caching server, may include a policy processing module 51, a task executing module 52, and a task feedback module 53, connected sequentially.

The protocol processing module 51 may be configured to receive and analyze the task commands sent by the Work servers, and add the task commands into the task queue.

The task executing module 52 may be configured to obtain the tasks from the task queue, and execute the tasks.

The task feedback module 53 may be configured to send task results as feedbacks to the Work servers.

Specifically, a process flow of the task executing module 52 may be as follows:
1) The task executing module 52 may determine the task types;
2) If the task is a prefetch task, the task executing module 52 may start downloading files, and report the download progress to Work servers on a regular basis;
3) If the task is a push task, the task executing module 52 may label the files as expired;
4) If the task is a file verification task, the task executing module 52 may calculate the MD5 values of the corresponding files; and
5) If the task is a file conversion task, the task executing module 52 may perform file conversion based on the target files.

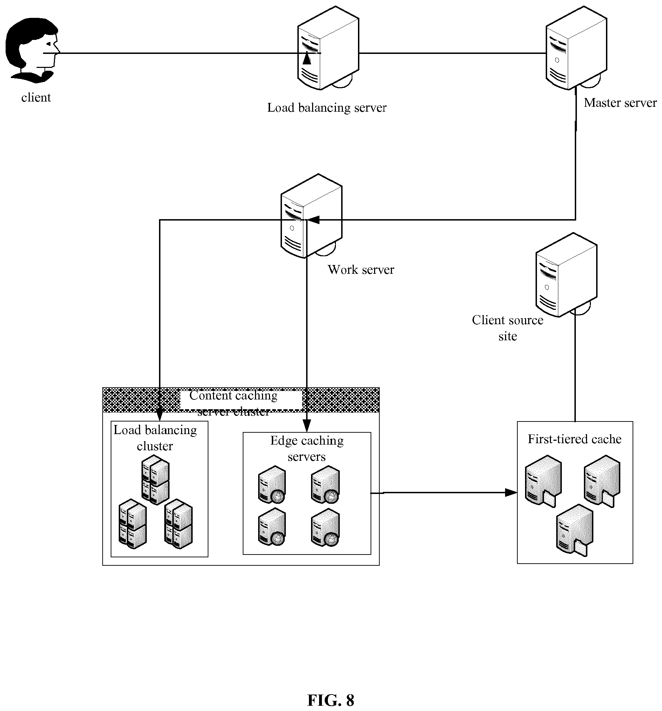

In the CDN network, to improve the users' experience when first accessing the network, the file content may be cached on the content caching servers before access by client terminals. This operation is referred to as prefetch. As shown in FIG. 8, for a prefetch task, an exemplary execution process may be as follows:
81) A client may submit a prefetch task request through API or webpages, e.g., http://www.a.com/test.flv;
82) The client's task request may be directed to any of the Master servers through load balancing servers such as lvs;
83) The Master server may verify task data, and direct the tasks to a currently prioritized Work server based on corresponding prefetch policies, and Work load property information registered on the ZooKeeper;
84) The Work server may calculate the acceleration ranges of the client in the CDN network, locate the load balancing server deployed with the accelerating node caching servers, and inquire the content caching server corresponding to the hashed prefetch url: : http://www.a.com/test.flv.
85) The load balancing server may return the ip of the corresponding content caching server 2.2.2.2;
86) The Work server may, based on calculation and the inquired ip address of the content caching server, utilize high-performance synchronous communication mechanism and proprietary protocols to send a prefetch command to the content management client terminal of the content caching server; the content caching server may determine if the file http://www.a.com/test.flv already exists; if the file http://www.a.com/test.flv does not exist, the content caching server may request for the file from the first-tiered content caching server 1.1.1.1.
87) The first-tiered caching server may determine if the file http://www.a.com/test.flv exists, if the file does not exist, the first-tiered caching server may request for the file from the client source server, i.e., download the test.flv file directly from the client's domain www.a.com.

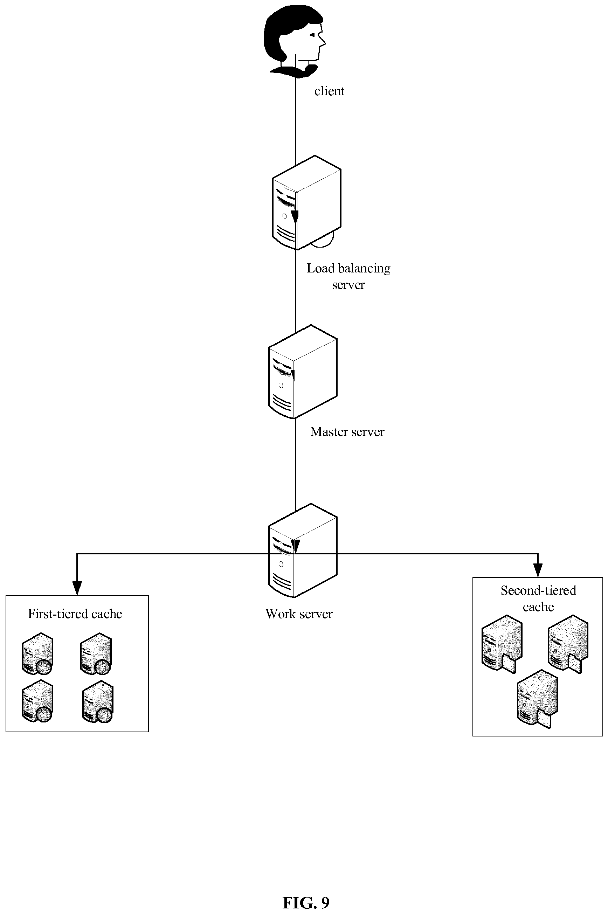

In the CDN network, after the client's file has been modified, an expiration process or deletion may be performed on the file cached in the CDN network. This operation is referred to as push. As shown in FIG. 9, an exemplary process flow of a push task may be as follows:
91) A client may submit a push task request, through API or webpages, e.g., http://www.a.com/test.flv;
92) The client's request may be directed to any of the Master server through the load balancing server such as lvs;
93) The Master server may verify task data, split the task into a plurality of sub-tasks based on corresponding push policies and information such as load on the Work servers, properties, and operators, registered in ZooKeeper, and allocate the sub-tasks onto a plurality of Work servers;
94) The Work servers may calculate the acceleration range of the client in the CDN network;
95) The Work servers may utilize high-performance synchronous communication mechanism and proprietary protocols to send push commands to the content management client terminal of the first-tiered content caching server, and the content management client terminal may push cached files; and
96) When completing all the push tasks on the first-tiered content caching server, push commands may be sent to second-tiered content caching servers to push files.

It should be noted that, the abovementioned embodiments are only illustrated using a two-tiered caching architecture. For a multi-tiered caching architecture, push tasks may be sequentially sent to multi-tiered caching servers.

Accordingly, the disclosed CDN-based content management system provides an entire set of content caching server for content management system. The content management system may manage the entire life cycle of the cached files in the content caching servers based on different media types; based on the acceleration ranges of source sites and the hotness level of the files, provide precise ranges, precise traffic control, and hotspot prefetch functions, to improve user's experience of the first access to the websites; utilize high-performance asynchronous communication mechanism, compressed proprietary protocols, and multi-channel architecture to allocate tasks such that the throughput and the timeliness of the massive content management tasks may be satisfied; by providing verification of the coverage of the content cached files, verify the file coverage at content caching nodes at any time under current service; provide different types of management operations for different media such as images, videos, live broadcast, webpages, etc.; and by lateral extension distribution of the Work servers, increase the throughput of the system without modifying code or ending service. Thus, the present disclosure effective overcome various shortcomings in the conventional technology, and therefore has high industrial utilization value.

The above embodiments are only exemplary to illustrate the principles and effects of the present disclosure, and are not intended to limit the scope of the present disclosure. Any person skilled in the art can make modifications or changes to the abovementioned embodiments without departing from the scope of the present disclosure, covered by the claims of the present disclosure.

## Claims

1. A CDN-based content management system, comprising: a distributed scheduling center (1), a data center (2), a task executing server cluster (3), a distributed reliability coordinating system (4), and content caching servers (5), **characterized in that**:
the distributed scheduling center includes a plurality of distributed scheduling servers, and is configured to schedule tasks based on client content management requests;
the data center is configured to store client task request data, and count and analyze task;
the task executing server cluster (3) including task executing servers is deployed in different regions and operated by different operators, configured to receive task conversion commands sent by the distributed scheduling servers, and send task commands to content caching servers deployed in corresponding regions and operated by corresponding operators;
the distributed reliability coordinating system is configured to store status and properties of all servers in the content management system; and
the content caching servers (5) are configured to cache client files, and each of the content caching servers (5) is arranged with a content management client; and the content management client is configured to execute tasks indicated in the task commands allocated by a task executing server in the task executing server cluster (3) and send task results as feedback to the task executing server, and the task executing server is configured to send the task results as feedback to the distributed scheduling center (1).

2. The CDN-based content management system according to claim 1, wherein: in the distributed scheduling center, one distributed scheduling server is selected as a central scheduling server, when any one of the distributed scheduling servers fails, the central scheduling server selects another distributed scheduling server to take over work load of failed distributed scheduling server, and when the central scheduling server fails, other distributed scheduling servers select a new central scheduling server to take over work load from previous central scheduling server.

3. The CDN-based content management system according to claim 1, wherein a distributed scheduling server (1) comprises a system interface module (11), a task scheduling module (12), a policy module (13), a task executing load balancing module (14), and a sub-task allocating module (15);
the system interface module is configured to receive and verify client content management requests, store tasks, and simultaneously add the tasks into a task queue;
the policy module is configured to generate different policies for clients based on service configuration data and types of user requests;
the task scheduling module is configured to obtain tasks from the task queue based on the policy for current clients and the service configuration data, initiate the tasks and schedule tasks for execution;
the task executing load balancing module is configured to register current load, CPU, memory, and task allocation of the task executing servers, select task executing servers that are in a same region and operated by a same operator from the task executing server cluster, and select a task executing server having a lowest load from the selected task executing servers to execute the allocated tasks; and
the sub-task allocating module is configured to split each of the tasks into sub-tasks based on regions or operators, send the sub-tasks to the selected task executing server having the lowest load through the task conversion commands, and maintain a mapping relationship between the selected task executing server and the sub-tasks.

4. The CDN-based content management system according to claim 3, wherein the subtask allocating module is configured to split each of the tasks based on regions or operators, use JSON as a language for data exchange to program the tasks, and use asynchronous communication mechanism to send the tasks.

5. The CDN-based content management system according to claim 3, wherein: the task executing server includes a sub-task receiving module (31), a task computing module (32), a message sending module (33), a task feedback module (34), and a caching module (35);
the sub-task receiving module is configured to receive the sub-tasks sent by the distributed scheduling servers, and add the sub-tasks into a task queue;
the task computing module is configured to calculate the content caching servers covered by the tasks constituted by all the sub-tasks based on CDN acceleration information of the client cached in the caching module, and generate the task commands;
the message sending module is configured to send the task commands to all the content caching servers covered by the tasks;
the task feedback module is configured to receive task results feedback from the content management clients, and update task progress based on the task results; and
the caching module is configured to cache a status of each node in the CDN, and update software and hardware failures of all nodes in real-time; and store and update the service configuration data of the client in real-time, and cache calculation results of target tasks.

6. The CDN-based content management system according to claim 5, wherein: the message sending module is further configured to, when sending the task commands to the content caching servers covered by the tasks, if the task commands are unsuccessfully sent, caused by a feedback from client showing failure or a failure caused by a timeout, attempt to resend the task commands for a plurality of times, and add the task commands into the task queue when attempting to resend.

7. The CDN-based content management system according to claim 1, wherein the content management client includes a policy processing module (51), a task executing module (52), and a task feedback module (53);
the protocol processing module is configured to receive and analyze task commands sent by the task executing servers, and add the task commands into a task queue;
the task executing module is configured to obtain tasks from the task queue, and execute the tasks; and
the task feedback module is configured to send task results as feedback to the task executing servers.

8. The CDN-based content management system according to claim 7, wherein: the task executing module is further configured to perform the following operations when executing a task:
firstly determining a task type;
starting downloading files and reporting a download progress to the task executing servers on a regular basis if the task is a prefetch task;
labelling files as expired or deleting the files if the task is a push task;
calculating MD5 values of corresponding files if the task is a file verification task; and
performing a format conversion based on target files if the task is a file conversion task.

9. The CDN-based content management system according to claim 8, wherein: the prefetch task is executed by the following processes:
a load balancing server receiving a prefetch task request from a client and transmitting the prefetch task request to any of the distributed scheduling servers;
the distributed scheduling server verifying the task indicated in the prefetch task request, and directing the task to a currently prioritized task executing server based on corresponding prefetch policies, and load property information of the task executing server;
the task executing server calculating acceleration regions required by the client in the CDN, locating the load balancing server deployed with an accelerating node of a corresponding content caching server, and inquiring the corresponding content caching server;
the load balancing server returning an ip address of the corresponding content caching server; and
the task executing server sending a prefetch command to the content management client of the content caching server; determining if a file for the prefetch exists; if the file does not exist, the task executing server requesting for the file from a first-tiered content caching server; and the first-tiered content caching server determining an existence of the file; if the file does not exist, the first-tiered content caching server requesting for the file from a client source server.

10. The CDN-based content management system according to claim 8, wherein the push task is executed by the following processes:
a load balancing server receiving a push task request from a client and transmitting the push task request to any of the distributed scheduling servers;
the distributed server verifying the task indicated in the push task request, splitting the task into a plurality of sub-tasks based on information of regions or operators, and allocating the sub-tasks onto a plurality of task executing servers;
the task executing servers calculating acceleration regions required by the client in the CDN based on information of regions or operators;
the task executing servers sending push commands to the content management client of a first-tiered content caching server, and the content management client pushing cached files; and
when completing all the push tasks on the first-tiered content caching server, sending push commands to a second-tiered content caching server to push files.

## Patentansprüche

1. Ein CDN-basiertes Inhaltsmanagementsystem, das Folgendes umfasst: ein verteiltes Zentrum für Ablauffolgeplanung (1), ein Datenzentrum (2), ein Server-Cluster (3) zur Ausführung von Aufgaben, ein verteiltes Koordinationssystem (4) für Zuverlässigkeit und Inhalts-Caching-Servers (5), **dadurch gekennzeichnet, dass**:
Das verteilte Zentrum für Ablauffolgeplanung eine Vielzahl von verteilten Servern für Ablauffolgeplanung einschliesst und konfiguriert ist, um Aufgaben basierend auf Kundenanforderungen hinsichtlich des Inhaltsmanagements zu planen;
das Datenzentrum für die Speicherung der Kundenaufgabenanforderungsdaten, sowie Berechnung und Analyse von Aufgaben konfiguriert ist;
der Server-Cluster (3) für die Ausführung von Aufgaben einschliesslich des Servers für die Aufgabenausführung in verschiedenen Regionen eingesetzt und durch verschiedene Operatoren betrieben wird, konfiguriert, um von den geteilten Servern für Ablauffolgeplanung gesandte Aufgabenkonversionsbefehle zu empfangen, und Aufgabenbefehle an Inhalts-Caching-Server zu senden, die in entsprechenden Regionen eingesetzt und durch entsprechende Operatoren betrieben werden;
das verteiltes Koordinationssystem für Zuverlässigkeit konfiguriert ist, um den Status und die Eigenschaften aller Server im Inhaltsmanagementsystem zu speichern; und
die Inhalts-Caching-Server (5) so konfiguriert sind, dass sie Kundendateien im Cache speichern, und jeder Inhalts-Caching-Server (5) bei einem Inhaltsmanagementkunden angeordnet ist; und der Inhaltsmanagementkunde zur Ausführung von Aufgaben konfiguriert ist, die in den Aufgabenbefehlen angegeben sind, die durch einen Server für die Ausführug von Aufgaben in dem Server-Cluster (3) für die Ausführung von Aufgaben zugewiesen wurden, und, um Aufgabenergebnisse als Rückmeldung an den Server für die Ausführung von Aufgaben zu senden, und der Server für die Ausführung von Aufgaben konfiguriert ist, um die Aufgabenergebnisse als Rückmeldung an das geteilte Zentrum für Ablauffolgeplanung (1) zu senden.

2. Das CDN-basierte Inhaltsmanagementsystem gemäss Anspruch 1, bei dem im verteilten Zentrum für Ablauffolgeplanung ein verteilter Server für Ablauffolgeplanung als ein zentraler Server für Ablauffolgeplanung gewählt wird, und wenn irgendeiner der verteilten Server für Ablauffolgeplanung ausfällt, der zentrale Server für die Ablauffolgeplanung einen anderen Server für Ablauffolgeplanung wählt, um die Arbeitslast des ausgefallenen Servers für Ablauffolgeplanung zu übernehmen, und wenn der zentrale Server für Ablauffolgeplanung ausfällt, andere verteilte Server für Ablauffolgeplanung einen neuen zentralen Server für Ablauffolgeplanung wählen zwecks Übernahme der Arbeitslast von vorherigen zentralen Servern für Ablauffolgeplanung.

3. Das CDN-basierte Inhaltsmanagementsystem gemäss Anspruch 1, bei dem ein verteilter Server (1) für Ablauffolgeplanung ein System-Interface-Modul (11), ein Aufgabenplanungsmodul (12), ein Policy-Modul (13), ein Modul (14) zum Ausgleich der Arbeitslast zur Aufgabenausführung und ein Modul (15) zur Zuweisung von Unteraufgaben umfasst;
das System-Interface-Modul, das konfiguriert ist, um Kundenanfragen zum Inhaltsmanagement zu erhalten und überprüfen, Aufgaben zu speichern, und gleichzeitig Aufgaben zu der Aufgabenwarteschlange hinzuzufügen;
das Policy-Modul, das konfiguriert ist, um verschiedene Policies für Kunden basierend auf Dienstkonfigurationsdaten und Art der Gebraucheranforderungen zu erzeugen;
das Aufgabenplanungsmodul, das konfiguriert ist, um Aufgaben aus der Aufgabenwarteschlange basierend auf der Policy für aktuelle Kunden und den Dienstkonfigurationsdaten zu erhalten, die Aufgaben einzuleiten und Aufgaben für die Ausführung zu planen;
das Modul zum Ausgleich der Arbeitslast zur Aufgabenausführung, das konfiguriert ist, um die aktuelle Arbeitslast, CPU, Speicher und Aufgabenzuweisung des Servers für die Aufgabenausführung zu erfassen, Server für die Aufgabenausführung, die sich in derselben Region befinden und durch denselben Operator aus dem Server-Cluster für Aufgabenausführung betrieben werden, zu wählen sowie einen Server für Aufgabenausführung mit der geringsten Arbeitslast aus den gewählten Servern für Aufgabenausführung zur Ausführung der zugewiesenen Aufgabe zu wählen; und
das Modul für Zuweisung von Unteraufgaben, das konfiguriert ist, um jede der Aufgaben in Unteraufgaben basierend auf Regionen und Operatoren aufzuteilen, die Unteraufgaben an den gewählten Server für Aufgabenausführung mit der geringsten Arbeitslast durch die Aufgabenkonversionsbefehle zu senden und eine Mapping-Beziehung zwischen dem gewählten Server für Aufgabenausführung und den Unteraufgaben zu sichern.

4. Das CDN--basierte Inhaltsmanagementsystem gemäss Anspruch 3, bei dem das Modul für Zuweisung von Unteraufgaben konfiguriert ist, um jede Aufgabe basierend auf Regionen und Operatoren aufzuteilen, JSON als Sprache für Datenaustausch zur Aufgabenprogrammierung und asynchrone Kommunikationsmechanismen für die Aufgabenübermittlung zu benutzen.

5. Das CDN-basierte Inhaltsmanagementsystem gemäss Anspruch 3, bei dem der Server für die Ausführung von Aufgaben, ein Empfangsmodul (31) für Unteraufgaben, ein Aufgabenrechenmodul (32), ein Nachrichtensendemodul (33), ein Aufgabenrückmeldungsmodul (34 und ein Caching-Modul (35) einschliesst;
Das Empfangsmodul für Unteraufgaben ist so konfiguriert, dass es die von den verteilten Servern für Ablauffolgeplanung gesandten Unteraufgaben empfängt und die Unteraufgaben zu der Aufgabenwarteschlange hinzufügt;
Das Aufgaberechenmodul ist so konfiguriert, dass es die Server für Inhalts-Caching, die durch alle Unteraufgaben gebildeten Aufgaben gedeckt sind, basierend auf CDN-Beschleunigungsinformation des im Caching-Modul im Cache gespeicherten Kunden berechnet und die Aufgabenbefehle erstellt;
das Nachrichtensendemodul ist so konfiguriert, dass es Aufgabenbefehle an alle durch die Aufgaben gedeckte Inhalts-Caching-Server sendet;
Das Aufgabenrückmeldemodul ist so konfiguriert, dass es Rückmeldungen von Aufgabenergebnissen von den Inhaltsmanagementkunden empfängt und den Aufgabenfortschritt basierend auf den Aufgabenergebnissen aktualisiert; und
Das Caching-Modul ist so konfiguriert, dass es den Status eines jeden Knoten in dem CDN im Cache speichert, und Software- und Hardware-Fehler aller Knoten in Istzeit aktualisiert; und die Dienstkonfigurationsdaten des Kunden in Istzeit speichert und aktualisiert, und im Cache Berechnungsergebnisse von Zielaufgaben speichert.

6. Das CDN-basierte Inhaltsmanagementsystem gemäss Anspruch 5, bei dem das Nachrichtensendemodul weiter so konfiguriert ist, dass es bei Sendung der Aufgabenbefehle an die durch die Aufgaben gedeckten Inhalts-Caching-Server, wenn die Aufgabenbefehle erfolglos gesandt wurden aufgrund einer Rückmeldung des Kunden, die einen Fehler aufweist, oder eines durch einen Zeitausfall verursachten Fehlers, versucht, mehrfach die Aufgabenbefehle erneut zu senden und die Aufgabenbefehle in der Aufgabenwarteschlange bei dem Versuch der erneuten Sendung hinzuzufügen.

7. Das CDN-basierte Inhaltsmanagementsystem gemäss Anspruch 1, bei dem der Inhaltsmanagementkunde ein Policy-Verarbeitungs-Modul (51), ein Aufgabenausführungsmodul (52) und ein Aufgabenrückmeldemodul (53) einschliesst;
Das Protokollverarbeitungsmodul ist so konfiguriert, dass es von den Servern für Ausfabenausführung gesandte Aufgabenbefehle empfängt und analysiert, und die Aufgabenbefehle zu der Aufgabenwarteschlange hinzufügt;
Das Aufgabenausführungsmodul ist so konfiguriert, dass es von der Aufgabenwarteschlange Aufgaben erhält und die Aufgaben ausführt; und
Das Aufgabenrückmeldemodul ist so konfiguriert, dass es Aufgabenergebnisse als Rückmeldung an die Server für Aufgabenbefehle sendet.

8. Das CDN-basierte Inhaltsmanagementsystem gemäss Anspruch 7, bei dem das Aufgabenausführungsmodul ausserdem so konfiguriert ist, dass es bei der Ausführung einer Aufgabe folgende Funktionen erfüllt:
An erster Stelle Bestimmung einer Aufgabenart;
Herunterladen von Datein starten und die Server für Aufgabenausführung über den Herunterladungsvorgang auf einer regelmässigen Grundlage informieren, wenn die Aufgabe eine Vorabrufaufgabe ist;
Dateikennzeichnung als abgelaufen oder Löschen der Dateien, wenn die Aufgabe eine PUSH-Aufgabe ist;
MD5-Werte von entsprechenden Dateien berechnen, wenn die Aufgabe eine Dateiüberprüfungsaufgabe ist; und Durchführung einer Formatkonvertierung basierend auf Zieldateien, wenn die Aufgabe eine Dateikonvertierungsaufgabe ist.

9. Das CDN-basierte Inhaltsmanagementsystem gemäss Anspruch 8, bei dem die Vorabrufaufgabe durch folgende Verfahren ausgeführt wird:
Ein Lastausgleichserve erhält eine Vorabrufaufgabeanforderung von einem Kunden und Weiterleitung der Vorabrufaufgabeanforderung zu irgendeinem der verteilte Server für Ablauffolgeplanung;
der verteilte Server für Ablauffolgeplanung überprüft die in der Vorabrufaufgabenanforderung angegebene Aufgabe und leitet die Aufgabe an einen aktuellen, prioritären Server für Aufgabenausführung basierend auf entsprechende Vorabruf-Policies, und Lasteigenschaftsinformation des Servers für Aufgabenausführung weiter;
der Server für Aufgabenausführung berechnet die von dem Kunden im CDN geforderte Regionsbeschleunigung, lokalisiert den Server für den Lastausgleich, der mit einem Beschleunigungsknoten eines entsprechenden Inhalt-Caching-Servers bereitgestellt wird, und untersucht den entsprechenden Inhalt-Caching-Server;
der Ausgleichsserver sendet eine IP-Adresse des entsprechenden Inhalts-Caching-Servers zurück; und
der Server für Aufgabenausführung sendet einen Vorabrufbefehl an den Kunden des Inhaltsmanagements des Inhalts-Caching-Servers; bestimmt, ob es eine Datei für den Vorabruf gibt; wenn die Datei nicht vorhanden ist, Anforderung des Servers für Aufgabenausführung der Datei von einem als erster, eingegestufter Inhalts-Caching-Server, und der als erster, eingestufter Inhalts-Caching-Server bestimmt ein Vorhandensein der Datei; wenn die Datei nicht vorhanden ist, fordert der als erster, eingestufter Inhalts-Caching-Server die Datei von einem Server für Kundenquelladressen an.

10. Das CDN-basierte Inhaltsmanagementsystem gemäss Anspruch 8, bei dem die PUSH-Aufgabe durch folgende Verfahren ausgeführt wird:
Ein Lastausgleichserver empfängt von einem Kunden eine Anforderung einer Push-Aufgabe und übermittelt die Push-Aufgabe an irgendeinen der verteilte Server für Ablauffolgeplanung;
der verteilte Server überprüft die in der Push-Aufgabe angegebene Aufgabe, teilt die Aufgabe in eine Vielzahl an Unteraufgaben ein basierend auf Information der Regionen oder Operatoren, und verteilt die Unteraufgaben auf eine Vielzahl von Servern für Aufgabenausführung;
die Server für Aufgabenausführung berechnet die vom Kunden im CDN angeforderten Beschleunigungsregionen basierend auf Information der Regionen oder Operatoren;
die Server für Aufgabenausführung senden Push-Befehle an den Kunden des Inhaltsmanagement eines ersten, eingestuften Inhalt-Caching-Servers, und der Kunde des Inhaltsmanagments stellt im Cache gespeicherte Dateien bereit; und
wenn alle Push-Aufgaben im als erster, eingestufter Inhalts-Caching-Speicher vervollständigt sind, werden PUSH-Befehle an einen als zweiter, eingestufter Inhalts-Caching-Server gesandt zum Erhalt von Push-Dateien.

## Revendications

1. Un système de gestion de contenu basé sur un Réseau de diffusion de contenu, comprenant un centre de programmation distribuée (1), un centre de données (2), une grappe de serveurs d'exécution des tâches (3), un système de coordination de la fiabilité distribuée (4) et des serveurs de mise en cache de contenu (5), **caractérisé en ce que**:
le centre de programmation distribuée comprend une série de serveurs de programmation distribuée, et il est configuré pour planifier des tâches en fonction des demandes de gestion de contenu client;
le centre de données est configuré pour stocker des données des demandes de tâches client, et pour compter et analyser les tâches;
la grappe de serveurs d'exécution des tâches (3), comprenant des serveurs d'exécution de tâches, est déployée sur différentes régions et gérée par différents opérateurs ; elle est configurée pour recevoir des commandes de conversion de tâches, envoyées par les serveurs de programmation distribuée et pour envoyer des commandes de tâches aux serveurs de mise en cache de contenu déployés sur les régions correspondantes et gérés par les opérateurs concernés;
le système de coordination de la fiabilité distribuée est configuré pour stocker le statut et les propriétés de tous les serveurs dans le système de gestion de contenu; et
les serveurs de mise en cache de contenu (5) sont configurés pour mise en cache de fichiers client, et chaque serveur de mise en cache de contenu (5) est établi avec un client de gestion de contenu; et le client de gestion de contenu est configuré pour exécuter les tâches indiquées dans les commandes de tâches attribuées par un serveur d'exécution de tâches dans la grappe de serveurs d'exécution des tâches (3), et pour envoyer les résultats des tâches comme retour d'information vers le serveur d'exécution de tâches ; et le serveur d'exécution de tâches est configuré pour envoyer les résultats des tâches comme retour d'information vers le centre de programmation distribuée (1).

2. Le système de gestion de contenu basé sur un Réseau de diffusion de contenu conformément à la revendication 1, où, dans le centre de programmation distribuée est sélectionné un serveur de programmation distribuée comme serveur de programmation centrale, en cas de défaillance de l'un quelconque des serveurs de programmation distribuée, le serveur de programmation centrale sélectionne un autre serveur de programmation distribuée pour assumer la charge de travail du serveur de programmation distribuée défaillant et en cas de défaillance du serveur de programmation centrale, d'autres serveurs de programmation distribuée sélectionnent un nouveau serveur de programmation centrale pour assumer la charge de travail du serveur de programmation centrale précédent.

3. Le système de gestion de contenu basé sur un Réseau de diffusion de contenu conformément à la revendication 1, où un serveur de programmation distribuée (1) comprend un module d'interface du système (11), un module de programmation de tâches (12), un module de normes (13), un module de stabilisation de charges d'exécution de tâches (14) et un module d'assignation de sous-tâches (15) ;
le module d'interface du système est configuré pour recevoir et vérifier les demandes de gestion de contenu client, stocker des tâches et simultanément ajouter des tâches à une queue de tâches;
le module de normes est configuré pour générer différentes normes pour des clients en fonction des données de configuration des services et des types de demandes des utilisateurs;
le module de programmation de tâches est configuré pour obtenir des tâches de la queue de tâches en fonction des normes pour les clients actuels et les données de configuration des services et des types de demandes des utilisateurs;
le module de stabilisation de charges d'exécution de tâches est configuré pour enregistrer les charges courantes, la CPU, la mémoire, et l'assignation de tâches des serveurs d'exécution de tâches, pour sélectionner les serveurs d'exécution de tâches qui sont sur la même région et gérés par le même opérateur à partir de la grappe de serveurs d'exécution des tâches, et pour sélectionner le serveur d'exécution de tâches ayant la charge la plus légère dans les serveurs d'exécution de tâches sélectionnés pour exécuter les tâches assignées; et
le module d'assignation de sous-tâches est configuré pour fractionner chaque tâche en sous-tâches en fonction des régions ou des opérateurs; envoyer les sous-tâches vers le serveur d'exécution de tâches sélectionné ayant la charge la plus légère à partir des commandes de conversion de tâches, et maintenir une relation de correspondance entre le serveur d'exécution de tâches sélectionné et les sous-tâches.

4. Le système de gestion de contenu basé sur un Réseau de diffusion de contenu conformément à la revendication 3, où le module d'assignation de sous-tâches est configuré pour fractionner chaque tâche en fonction des régions ou des opérateurs; utiliser JSON comme langage d'échange de données pour programmer les tâches, et utiliser le mécanisme de communication asynchrone pour envoyer les tâches.

5. Le système de gestion de contenu basé sur un Réseau de diffusion de contenu conformément à la revendication 3, où le serveur d'exécution de tâches comprend un module de réception de sous-tâches (31), un module de calcul de tâches (32), un module d'envoi de messages (33), un module de rétroaction de tâches (34) et un module de mise en cache (35) ;
le module de réception de sous-tâches est configuré pour recevoir les sous-tâches envoyées par les serveurs de programmation distribuée et ajouter les sous-tâches à la queue de sous-tâches;
le module de calcul de tâches est configuré pour calculer les serveurs de mise en cache de contenu, couverts par les tâches comprenant toutes les sous-tâches basées sur l'information d'accélération du Réseau de diffusion de contenu, du client mis en cache dans le module de mise en cache, et générer les commandes de tâches;
le module d'envoi de messages est configuré pour envoyer les commandes de tâches à tous les serveurs de mise en cache de contenu couverts par les tâches;
le module de rétroaction de tâches est configuré pour recevoir la rétroaction des résultats des tâches des clients de gestion de contenu et mettre à jour l'avancement des tâches en fonction des résultats des tâches; et
le module de mise en cache est configuré pour la mise en cache du statut de chaque nœud du Réseau de diffusion de contenu, et pour la mise à jour des défaillances du logiciel et du matériel de tous les nœuds en temps réel; et stocker et mettre à jour les données de configuration des services du client en temps réel, et la mise en cache des résultats du calcul des tâches cibles.

6. Le système de gestion de contenu basé sur un Réseau de diffusion de contenu conformément à la revendication 5, où le module d'envoi de messages est configuré en outre pour effectuer les pas suivants: lorsque les commandes des tâches, envoyées aux serveurs de mise en cache couverts par les tâches, ont des défaillances relatives à l'envoi, en raison d'une rétroaction envoyée du client montrant la défaillance ou une défaillance causée par un délai expiré, il essaie d'envoyer de nouveau les commandes des tâches plusieurs fois, et il ajoute les commandes des tâches à la queue de tâches lorsqu'il essaie de les envoyer de nouveau.

7. Le système de gestion de contenu basé sur un Réseau de diffusion de contenu conformément à la revendication 1, où le client de gestion de contenu comprend un module de traitement de normes (51), un module d'exécution de tâches (52) et un module de rétroaction de tâches (53);
le module de traitement de normes est configuré pour recevoir et analyser les commandes de tâches envoyées par les serveurs d'exécution de tâches et ajouter les commandes de tâches à une queue de tâches;
le module d'exécution de tâches est configuré pour obtenir des tâches de la queue de tâches et les exécuter;
le module de rétroaction de tâches est configuré pour envoyer les résultats des tâches comme rétroaction aux serveurs d'exécution de tâches.

8. Le système de gestion de contenu basé sur un Réseau de diffusion de contenu conformément à la revendication 7, où le module d'exécution de tâches est en outre configuré pour exécuter les opérations suivantes lorsqu'il exécute une tâche:
premièrement, déterminer le type de tâche;
commencer à télécharger les fichiers et informer les serveurs d'exécution de tâches sur l'avancement du téléchargement, régulièrement, si la tâche est pré-extraite;
étiqueter les fichiers à mesure qu'ils expirent, ou éliminer les fichiers si la tâche est une tâche push;
calculer les valeurs MD5 des fichiers correspondants si la tâche est une tâche de vérification de fichiers; et
exécuter une conversion de formats en fonction des fichiers cibles, si la tâche est une tâche de conversion de fichiers.

9. Le système de gestion de contenu basé sur un Réseau de diffusion de contenu conformément à la revendication 8, où la tâche pré-extraite est exécutée par les processus suivants:
un serveur de stabilisation de charges reçoit une demande de tâche pré-extraite d'un client et transmet la demande de tâche pré-extraite à l'un quelconque des serveurs de programmation distribuée;
le serveur de programmation distribuée vérifie la tâche indiquée dans la demande de tâche pré-extraite et dirige la tâche vers un serveur d'exécution de tâches priorisées en cours, en fonction des normes de pré-extraction, et il charge l'information de propriété du serveur d'exécution de tâches;
le serveur d'exécution de tâches calcule les régions d'accélération demandées par le client dans le Réseau de diffusion de contenu, situe le serveur de stabilisation de charges déployé avec un nœud accélérateur du serveur de mis en cache de contenu correspondant, et interroge le serveur de mise en cache de contenu correspondant;
le serveur de stabilisation de charges renvoie une adresse IP du serveur de mise en cache de contenu correspondant; et
le serveur d'exécution de tâches envoie une commande de pré-extraction au client de gestion de contenu du serveur de mise en cache de contenu, il détermine s'il existe un fichier pour la pré-extraction; si le fichier n'existe pas, le serveur d'exécution de tâches demande un fichier du serveur de mise en cache de contenu de premier niveau; et le serveur de mise en cache de contenu de premier niveau détermine l'existence d'un fichier; si le fichier n'existe pas, le serveur de mise en cache de contenu de premier niveau demande le fichier d'un serveur source client.

10. Le système de gestion de contenu basé sur un Réseau de diffusion de contenu conformément à la revendication 8, où la tâche push est exécutée par les processus suivants:
un serveur de stabilisation de charges reçoit une demande de tâche push d'un client et transmet la demande de tâche push à l'un quelconque des serveurs de programmation distribuée;
le serveur de programmation distribuée vérifie la tâche indiquée dans la demande de tâche push et divise la tâche en une pluralité de sous-tâches en fonction de l'information de régions ou d'opérateurs et assigne les sous-tâches à une série de serveurs d'exécution de tâches;
les serveurs d'exécution de tâches calculent les régions d'accélération demandées par le client dans le Réseau de diffusion de contenu en fonction de l'information de régions ou d'opérateurs;
les serveurs d'exécution de tâches envoient des commandes push au client de gestion de contenus d'un serveur de mis en cache de contenu de premier niveau, et le client de gestion de contenu pousse les fichiers mis en cache; et
lorsque toutes les tâches push sont complétées dans le serveur de mis en cache de contenu de premier niveau, il envoie les commandes push à un serveur de mis en cache de contenu de deuxième niveau pour pousser les fichiers.
